# EUROPÄISCHE PATENTANMELDUNG

(11) **EP 4 180 403 A1**
(43) Veröffentlichungstag der Anmeldung: **17.05.2023**
(21) Anmeldenummer: 21208029.5
(22) Anmeldetag: 12.11.2021
(51) Int. Cl.: C04B 20/02

(54) **CO2-UMWANDLUNG IN ERSATZSAND**

(71) Anmelder: Kalkert, Martin Lambert, 52428 Jülich (DE)
(72) Erfinder: Kalkert, Martin Lambert, 52428 Jülich (DE)
(74) Vertreter: Sommer-Zhang, Isabella

(57) **Zusammenfassung**

Die Erfindung betrifft ein Verfahren (100) zur Herstellung von Gesteinskörnung mit Carbonatanteil (20a) umfassend das Bereitstellen (110) eines Grundgesteins (20), das Zerkleinern (120) des Grundgesteins (20), das Zugeben (130) des zerkleinerten Grundgesteins (20) zusammen mit CO2 in Form eines CO2-haltigen Gases oder eines CO2-haltigen Fluides in einen Reaktor (22, 22a), das Anreichern (140) des Grundgesteins (20) in dem Reaktor (22, 22a) mit CO2 zur Herstellung einer Gesteinskörnung mit festgebundenem CO2 als Carbonatanteil als die Gesteinskörnung mit Carbonatanteil (20a) unter Reduktion des CO2-Anteils des Gases oder Fluides und das Entfernen (150) der Gesteinskörnung mit Carbonatanteil (20a) nach der Anreicherung (120) aus dem Reaktor (22, 22a).

## Beschreibung

### Gebiet der Erfindung

Die Erfindung betrifft ein Verfahren zur Herstellung von CO2-angereicherter Gesteinskörnung. Die Erfindung betrifft zudem eine Anlage zur Herstellung von CO2-angereicherter Gesteinskörnung, die CO2-angereicherte Gesteinskörnung an sich sowie die Verwendung der CO2-angereicherten Gesteinskörnung.

### Hintergrund der Erfindung

Die Verwendung von Gesteinskörnung beispielsweise in Form von Sand als Baustoff spielt insbesondere seit der Industrialisierung eine immer größere Rolle. Obwohl es auf der Erde, insbesondere in den Wüsten in Form von Sand, mehr als genug Gesteinskörnung gibt, eignet sich zum Bauen nur ein geringer Bruchteil dieser Menge an Gesteinskörnung, da beispielsweise die Sandkörner des Wüstensands zu rund, zu glatt und/oder zu klein sind, um beispielsweise eine feste Verbindung mit aushärtenden Baustoffen einzugehen. Durch den derzeit immensen Bedarf in der Bauindustrie ist eine geeignete Gesteinskörnung, welche insbesondere in Lagerstätten wie Kiesgruben oder in Flüssen und Stränden zu finden ist, zu einer knappen Ressource geworden. Hinzu kommt, dass die Gewinnung von Gesteinskörnung in Flüssen und an Küstenschelfen die jeweiligen Biotope stört und sich großflächiger auswirkt als der Abbau von Brechsand, welcher durch Zerkleinerung von Gestein hergestellt wird. Weiterhin wird Gesteinskörnung in beträchtlichen Mengen aus Flussläufen und Seen abgebaut, was drastische Auswirkungen auf die Umwelt hat.

Um diesem Mangel entgegenzuwirken, wurden bereits Verfahren entwickelt, um Alternativen zu der natürlich vorkommenden, geeigneten Gesteinskörnung bereitzustellen. So wurde bereits Gesteinskörnung in Form von Sand aus der Wüste oder anderen Quellen fein aufgemahlen, bis sich eine Art Gesteinsmehl ergibt. Das so entstandene Pulver wird anschließend mit mineralischen Bindemitteln zu Pellets gepresst, welche in der Bauindustrie als Ersatz für Gesteinskörnung verwendet werden können. Allerdings werden sowohl bei der Gewinnung der natürlichen Gesteinskörnung, als auch bei der Herstellung von alternativen Gesteinskörnungen klimaschädliche Emissionen frei, welche insbesondere im Zuge des menschengemachten Klimawandels, Einfluss auf das Klima der Erde haben. Es wäre daher wünschenswert, wenn die Herstellung von Gesteinskörnung keinen klimaschädlichen Effekt hätte. Besonders ideal wäre ein Prozess, der sogar klimaschädliches CO2-Gas bei der Herstellung von Gesteinskörnung aus der Umwelt entfernen würde.

Der vorliegenden Erfindung liegt die Aufgabe zugrunde, den Stand der Technik zu verbessern oder ihm Alternativen zu bieten.

### Zusammenfassung der Erfindung

Es ist daher eine Aufgabe der Erfindung, die Schwächen des Stands der Technik zumindest zum Teil zu vermeiden und insbesondere eine klimafreundliche Alternative zu natürlich vorkommender Gesteinskörnung zu schaffen.

Die Aufgabe der Erfindung wird durch ein Verfahren zur Herstellung von Gesteinskörnung mit Carbonatanteil umfassend das Bereitstellen eines Grundgesteins, das Zerkleinern des Grundgesteins, das Zugeben des zerkleinerten Grundgesteins zusammen mit CO2 in Form eines CO2-haltigen Gases oder eines CO2-haltigen Fluids in einen Reaktor, das Anreichern des Grundgesteins in dem Reaktor mit CO2 zur Herstellung einer Gesteinskörnung mit festgebundenem CO2 als Carbonatanteil als die Gesteinskörnung mit Carbonatanteil unter Reduktion des CO2-Anteils des Gases oder Fluides und das Entfernen der Gesteinskörnung mit Carbonatanteil nach der Anreicherung aus dem Reaktor, gelöst.

Vorteil einer solchen Erfindung ist, dass durch eine Anreicherung eines Grundgesteins mit CO2 das CO2 aus einer Umgebung entfernt werden kann und gleichzeitig ein Baustoff entsteht, welcher als Wertprodukt in der Baubranche verwendet werden kann. Durch diese Kombination hat man einen zweifachen Vorteil, nämlich erstens die Bereitstellung eines CO2 neutralen oder weniger klimaschädlichen Prozesses und zweitens die Bereitstellung eines inzwischen knapp gewordenen Baustoffs als simples Abfallprodukt des ersten Prozesses. Eine solche Umgebung kann beispielsweise, aber nicht ausschließlich die Erdatmosphäre und/oder ein industrieller Prozess sein, bei welchem CO2 zum Beispiel durch Verbrennung oder durch andere chemische Reaktionen entsteht. Folglich ist es mit einem solch erfindungsgemäßen Verfahren möglich, dem menschgemachten Klimawandel durch das Entfernen von CO2 aus der Umgebung entgegenzuwirken, da das CO2 teilweise direkt aus der Erdatmosphäre entfernt wird, oder eine Emission von CO2 in die Atmosphäre zumindest teilweise verhindert wird. Das Grundgestein kann hierbei beispielsweise durch einen für die Bereitstellung des Grundgesteins geschaffene Produktionsstätte in Form eines Steinbruchs, Tagebaus oder Untertagebaus bereitgestellt werden. Ein weiterer Vorteil der Anreicherung von Grundgestein mit CO2 ist, dass durch Entzug von CO2 aus einer Umwelt eine Kosteneinsparung in Form einer Verringerung von CO2 Zertifikatkäufen erreicht werden kann. Ein weiterer Vorteil liegt darin, dass der Kohlenstoff im Gestein als Feststoff gebunden ist und nicht gasförmig als CO2 vorliegt, wie bei "klassischem" CCS in Sedimentgesteinen. Somit besteht keine Gefahr eines späteren "Ausgasen" von CO2.

Begrifflich sei hierzu folgendes erläutert:
Der Begriff "Gestein" bezeichnet im Sinne der Erfindung jedes mehr oder weniger stark verfestigte, natürlich auftretende, in der Regel mikroskopisch heterogene Gemisch aus Mineralkörnern, organischen oder anorganischen Ausscheidungen oder Rückständen von Lebewesen, wie zum Beispiel Muscheln. Hierunter fallen sowohl magmatische Gesteine, metamorphe Gesteine oder Sedimentgesteine.
Der Begriff "Gesteinskörnung" bezeichnet im Sinne der Erfindung natürliche und künstliche Gesteinskörner, welche entweder aus natürlichen Lagerstätten stammen oder bei der Wiederverwertung von Baustoffen oder als industrielles Nebenerzeugnis anfallen und als Baustoff verwendet werden. Hierbei wird Gesteinskörnung häufig als Zusatzstoff zusammen mit einem Bindemittel verarbeitet. So entsteht beispielsweise Asphalt, wenn Gesteinskörnung mit Bitumen vermischt wird. Als Zusatzstoff haben Kornform, Festigkeit und Sieblinie der Gesteinskörnung einen bedeutenden Einfluss auf die Eigenschaften des Baustoffs.
Als "natürliche Gesteinskörnung" wird jede Gesteinskörnung bezeichnet, welche aus natürlich in der Natur vorkommenden Ressourcen gewonnen wird und welche keine CO2-angereicherte Gesteinskörnung enthält. Als "klassische Gesteinskörnung" oder "herkömmliche Gesteinskörnung" wird sowohl natürliche Gesteinskörnung (u.a. auch Schotter, Kies, Bausand etc.) bezeichnet aber auch eine solche Gesteinskörnung, welche aus nicht natürlichen Ressourcen, wie zum Beispiel Bauschutt stammt, jedoch ebenfalls keine CO2-angereicherte Gesteinskörnung enthält. Folglich ist die "klassische Gesteinskörnung" und die "herkömmliche Gesteinskörnung" synonym zu der "Gesteinskörnung" zu verstehen.
Der Begriff "Grundgestein" bezeichnet erfindungsgemäß jedes Gestein, welches sich für eine Anreicherung mit CO2 eignet. Hierbei handelt es sich insbesondere um solche Gesteine, welche in der Lage sind, CO2 chemisch zu binden, wobei diese Bindung so stabil sein kann, dass eine feste Bindung des CO2 erreicht wird.
Der Begriff "CO2-haltiges Gas" bezeichnet ein Gas, welches mindestens CO2 enthält, aber auch weitere Gase enthalten kann. Beispielsweise kann es sich hierbei um Abgase aus Verbrennungsprozessen handeln oder um technisch reines CO2, welches in einer Reinheit von z.B. 99,8 % vorliegen kann. Entsprechend bezeichnet ein CO2-haltiges Fluid ein Fluid, in dem CO2 gelöst ist. Hierbei kann der Anteil des CO2 im Fluid je nach Anwendung variieren. Der Begriff "Fluid" bezeichnet hierbei jede Art an Fluiden, in denen CO2 reversibel zur Anreicherung im Grundgestein gelöst werden kann. Je nach dem vorliegenden Silikatmineral kann das CO2 als Gas oder gelöst in einem Fluid dem Silikatmineral als das Grundgestein angeboten werden, damit die Gesteinskörnung mit Carbonatanteil daraus entstehen kann.
Der Begriff "CO2-angereicherte Gesteinskörnung" bezeichnet eine Gesteinskörnung, welche mittels eines technischen Verfahrens mit CO2 angereichert worden ist, also nach der Anreicherung den zusätzlichen Kohlenstoff und den zusätzlichen Sauerstoff aufgrund der Anreicherung in gebundener Form im Gestein umfasst, wobei die Anreicherung des Grundgesteins mit CO2 hierbei teilweise oder vollständig erfolgen kann. Erfindungsgemäß kann diese Anreicherung von Gesteinskörnung mit CO2 durch eine Aufnahme des Gesteins der Gesteinskörnung von CO2 realisiert werden, wobei jeder dem Fachmann bekannte Aufnahmemechanismus infrage kommt. Bevorzugterweise jedoch findet eine chemische Bindung des CO2 mit dem Gestein der Gesteinskörnung statt. Dies stellt sicher, dass das CO2 auch zu einem späteren Zeitpunkt nicht durch die Gesteinskörnung in einem nennenswerten Maßstab an die Umwelt abgegeben wird, sondern dauerhaft in der Gesteinskörnung verbleibt. Besonders ist hierbei eine ionische Bindung des CO2 in Form von Carbonat, beispielsweise mit einem Silikat. Eine verallgemeinerte Reaktionsgleichung für Silikate mit zweiwertigen Kationen A kann hierbei wie folgt aussehen:

   A₂SiO₄ + CO₂ → 2ACO₃ + SiO₂
Die Begriffe "CO2-angereicherte Gesteinskörnung" und "Gesteinskörnung mit Carbonatanteil" werden vorliegend synonym verwendet.

Die Gesteinskörnung hat bevorzugt eine unregelmäßige Form und/oder eine raue Oberfläche, um eine besonders feste Bindung mit aushärtenden Baustoffen eingehen zu können.

Der Begriff "Gesteinskörnungskorngröße" beschreibt die Größe einzelner Partikel der Gesteinskörnung mit Carbonatanteil in einem Gemenge dieser Gesteinskörnung. Der Begriff "Grundkorngröße" beschreibt die Größe der Partikel des Grundgesteins. Außerdem beschreibt der Begriff "Mischkorngröße" die Größe einzelner Partikel einer Mischung von Grundgestein und Gesteinskörnung mit Carbonatanteil.

Der Begriff "erneuerbare Energien" bezeichnet Energien, die im menschlichen Zeithorizont für nachhaltige Energieversorgung praktisch unerschöpflich zur Verfügung stehen und bei denen kein klimaschädliches CO2 freigesetzt wird. Hierbei kann es sich beispielsweise um Windenergie, Sonnenenergie, Wellenenergie oder Geothermie handeln.

Als "klimaschädliches CO2" wird dasjenige CO2 bezeichnet, welches zusätzlich in die Atmosphäre abgegeben wird, wodurch der Anteil des CO2s in der Atmosphäre steigt. Hierbei kann es sich beispielsweise um solches CO2 handeln, welches bei der thermischen Verwertung fossiler Brennstoffe, oder bei der Verbrennung von Holz, stammend aus der Rodung von Wäldern, oder andere chemische Umwandlungsprozesse frei wird.

In einer weiteren Ausführungsform wird dem Reaktor das Grundgestein mit einer mittleren Grundkorngröße von zwischen 10µm und 3000µm, bevorzugt zwischen 50µm und 2500µm und besonders bevorzugt zwischen 60µm und 2000µm zugegeben. Hat das Grundgestein eine mittlere Gesteinskorngröße von zwischen 10µm und 3000µm kann ein einfacher und/oder kostengünstiger Transport des Grundgesteins gewährleistet werden. Außerdem kann eine solche mittlere Korngröße eine schnelle CO2-aufnahme des Grungesteins im Reaktor bewirken.

In einer weiteren Ausführungsform besitzt die Gesteinskörnung mit Carbonat eine mittlere Gesteinskörnungskorngröße von zwischen 10µm und 3000µm, bevorzugt zwischen 50µm und 2500µm und besonders bevorzugt zwischen 60µm und 2000µm.

In einer weiteren Ausführungsform ist die mittlere Grundkorngröße des Grundgesteins so angepasst, dass die Gesteinskörnung mit Carbonatanteil diese mittlere Gesteinskörnungskorngröße besitzt.

In einer weiteren Ausführungsform ist die mittlere Gesteinskörnungskorngröße der Gesteinskörnung mit Carbonatanteil durch Mischen mit Gesteinskörnung so angepasst, dass ein entsprechendes Gemisch eine mittlere Mischkorngröße von zwischen 10µm und 3000µm, bevorzugt zwischen 50µm und 2500µm und besonders bevorzugt zwischen 60µm und 2000µm besitzt. Das Mischen kann dabei mit üblichen Technologien ausgeführt werden. Mit Agglomerieren der Gesteinskörnung mit Carbonatanteil kann die mittlere Korngröße ebenfalls angepasst werden.

Eine weitere Ausführungsform umfasst den weiteren Schritt des Beheizens des Reaktors, um im Reaktor eine Temperatur zwischen 50°C und 1000°C, bevorzugterweise zwischen 90°C und 300°C und besonders bevorzugt zwischen 120°C und 220°C einzustellen. Eine erhöhte Temperatur zwischen 50°C und 1000°C ist insofern vorteilhaft, als dass die Anreicherung des Grundgesteins mit CO2 zu CO2-angereicherter Gesteinskörnung beschleunigt werden kann. Insbesondere in einem Temperaturbereich zwischen 120°C und 220°C (insbesondere für Olivin) kann eine schnelle und effiziente Anreicherung des Grundgesteins mit CO2 zu CO2-angereicherter Gesteinskörnung erreicht werden.

In einer weiteren Ausführungsform wird für das Beheizen des Reaktors Prozesswärme von einem von der Herstellung der Gesteinskörnung mit Carbonatanteil verschiedenen Prozess genutzt. Eine solche Ausführungsform ist insofern vorteilhaft, als dass Prozesswärme, beispielsweise in Form von Abwärme und/oder überflüssig anfallender Wärmeenergie für die Herstellung der Gesteinskörnung mit Carbonatanteil verwendet werden kann. Hierdurch wird zumindest teilweise, bevorzugt aber vollständig die für Anreicherung des Grundgesteins in dem Reaktor mit CO2 benötigte Wärmeenergie durch diese Prozesswärme bereitgestellt, sodass keine zusätzliche Wärmeenergie, beispielsweise durch Verbrennung fossiler Brennstoffe, zur Anreicherung des Grundgesteins in dem Reaktor mit CO2 benötigt wird. Hierdurch kann in vorteilhafter Weise der Ausstoß von CO2 zusätzlich verringert werden.

In einer weiteren Ausführungsform werden für das Beheizen des Reaktors erneuerbare Energiequellen verwendet. Eine solche Ausführungsform ist insofern vorteilhaft, da diese bei der Anreicherung des Grundgesteins in dem Reaktor mit CO2 kein klimaschädliches CO2 freisetzt. Die benötigte Wärmeenergie kann durch jede dem Fachmann bekannte Form der erneuerbaren Energie bereitgestellt werden. Hierbei kann es, je nach Art der erneuerbaren Energie, nötig sein, eine erneuerbare Energie, die nicht in Form von Wärmeenergie vorliegt, in Wärmeenergie umzuwandeln. Beispielsweise muss, wenn es sich um erneuerbare Energie in Form von elektrischer Energie handelt, zunächst eine Umwandlung der elektrischen Energie in Wärmeenergie, zum Beispiel durch eine Widerstandsheizung, erfolgen.

In einer weiteren Ausführungsform ist der Reaktor zylinderförmig ausgeführt und zumindest teilweise von einer Solarparabolrinne umgeben, um den Reaktor zu erhitzen. Eine solche Ausführung ist insofern vorteilhaft, da sie direkt am Reaktor Hitze durch Konzentrierung der Sonnenenergie zum Beheizen des Reaktors bereitstellt. Dies geschieht durch die Fokussierung von Sonnenenergie mittels einer Solarparabolrinne auf den Reaktor. In einer solchen Ausführungsform befindet sich der Reaktor konzentrisch zu einer Fokuslinie, sodass dieser durch die Bündelung der auf die Solarparabolrinne einfallenden Sonnenstrahlen in der Fokuslinie auf die Temperatur erhitzt werden kann, bei der die Anreicherung des Grundgesteins mit CO2 stattfindet, oder bei der eine optimale Anreicherung des Grundgesteins mit CO2 erfolgt. Hierbei hat der Reaktor an seiner Außenseite, an der das Sonnenlicht auf den Reaktor fokussiert wird und auf diesen auftrifft, eine dunkle Farbe, bevorzugt ist diese Farbe schwarz, da durch die dunkle Farbe ein hoher Anteil des auf den Reaktor einfallenden Sonnenlichts absorbiert wird und thermische Verluste durch Reflexion der Sonnenstrahlen vermindert werden. Ein zylindrisch ausgeführter Reaktor bietet hierbei den Vorteil, dass der Reaktor über die gesamte Länge der Solarparabolrinne in der Fokuslinie beheizt wird. Somit kann durch entsprechende Auslegung von Reaktor und Solarparabolrinne die Temperatur im Reaktor sowie die benötigte Kontaktzeit des Grundgesteins mit dem heißen Reaktor für die Anreicherung des Grundgesteins mit CO2 eingestellt werden. Statt der hier aufgeführten Solarparabolrinne kann jedes dem Fachmann geeignete Element zur Konzentrierung von Sonnenlicht, welches dazu geeignet ist, den Reaktor zu erhitzen, verwendet werden. Als solche Elemente kommen beispielsweise Linsen, Parabolspiegel oder eine Anordnung mehrerer ebener Spiegel infrage, welche das Sonnenlicht in einem Fokusbereich konzentrieren.

Eine weitere Ausführungsform umfasst den weiteren Schritt des Einleitens von komprimiertem Gas, das aus CO2 besteht oder zumindest einen CO2-Anteil besitzt, oder eines CO2-hlatigen Fluides in den Reaktor, um im Reaktor einen Druck bis 500bar, bevorzugterweise bis 350bar, besonders bevorzugt bis 75bar einzustellen. Bei dem Gas kann es sich hierbei beispielsweise aber nicht ausschließlich um Verbrennungsgase handeln. Diese können zum Beispiel bei der Verbrennung fossiler Brennstoffe oder bei der Verbrennung von klimafreundlichem Methangas aus Bioanlagen entstehen. Das Einstellen von Druck mit Hilfe von CO2-haltigem Gas in dem Reaktor hat den Vorteil, dass das Reaktionsgleichgewicht nach dem Prinzip von Le Chatelier in Richtung der Anreicherung des Grundgesteins mit CO2 verschoben werden kann, wodurch eine höhere Ausbeute an CO2-angereicherter Gesteinskörnung erzielt werden kann.

In einer weiteren Ausführungsform enthält das Grundgestein Silikate, bevorzugt ausgewählt aus der Olivingruppe und/oder der Pyroxengruppe (M1 M2 T206 mit M1 = Mg2+, Fe2+, Mn2+, Al3+, Fe3+, Ti4+, Ti3+, V3+, Sc3+, Cr3+, Zr4+, Zn2+; M2 = Mg2+, Fe2+, Mn2+, Ca2+, Na+, Li+; T = Si4+, Al3+, Fe3+). Das Bestehen des Grundgesteins aus oder das Vorhandensein von Silikaten im Grundgestein, insbesondere denen aus der Gruppe der Olivine ist insofern vorteilhaft, als dass diese große Mengen an CO2 in Form von Carbonat binden können. Beispielsweise werden mit einem Grundgestein Dunit, welches ein Gestein aus der Gruppe Peridotite ist und welches mindestens 90 % Olivin enthält, lediglich 1,8 Tonnen benötigt, um eine Tonne CO2 zu binden. Für Basalt hingegen, einem Gestein, welches relativ wenig Olivin enthält, werden hingegen 7,1 Tonnen Gestein benötigt, um eine Tonne CO2 zu binden. Auch wenn viel Grundgestein vonnöten ist, stellt dies keinen generellen Nachteil dieser Methode dar, da die carbonathaltige Gesteinskörnung als Baustoff weiter verwertbar ist und somit kein Abfall, sondern Rohstoff für die Bauindustrie darstellt. Auch die Minerale, die dabei kein Carbonat sind, sind als Baustoff nutzbar. Er Unterschied zu bestehenden Verfahren liegt somit auch darin, dass erstens möglichst viel CO2 in der Gesteinskörnung gebunden wird und diese anfallende Menge an Gesteinskörnung mit Carbonatanteil vollständig als Baustoff weiterverwendet werden kann.

In einer weiteren Ausführungsform wird als Grundgestein taubes Gestein, z.B. Abraum, und Aufbereitungsabgänge aus dem Bergbau und/oder Hüttenschlacke verwendet. Die Bezeichnung "Abraum" bezeichnet im Tagebau die das Nutzmineral (beispielsweise Erze) überdeckenden Gesteinsschichten. Die Bezeichnung "Aufbereitungsabgänge" bezeichnet feinkörnige Rückstände aus der Aufbereitung von Erzen, die zumeist in Form von Schlämmen vorliegen. Die Bezeichnung "Hüttenschlacke" bezeichnet die bei der Metallherstellung entstehenden, glasig oder kristallin erstarrten, nichtmetallischen Begleitphasen. Bei diesen nichtmetallischen Begleitphasen handelt sich um ein Stoffgemisch, welches sich zumeist aus basischen und sauren Oxiden zusammensetzt. Die Anreicherung dieser Grundgesteine mit CO2 hat den Vorteil, dass ihnen ein Verwendungszweck zukommt und diese Grundgesteine nicht auf einer Halde gelagert werden müssen, wodurch die damit einhergehende Lagerproblematik zumindest teilweise gelöst wird. Außerdem können bestehende Lagerstätten durch Nutzung der auf ihnen gelagerten Grundgesteine für das erfindungsgemäße Verfahren rückgebaut werden, wodurch diese Flächen der Natur zurückgegeben werden können. Zudem stellt die mittels des erfindungsgemäßen Verfahrens hergestellte, CO2-angereicherte Gesteinskörnung ein zusätzliches Wertprodukt dar, welches gewinnbringend am Markt veräußert werden kann.

Das erfindungsgemäße Verfahren löst somit zum Teil die Schwächen des Stands der Technik und stellt insbesondere eine klimafreundliche und umweltfreundliche Alternative zu natürlich vorkommender Gesteinskörnung zur Verfügung.

Die Aufgabe wird außerdem von einer Gesteinskörnung mit Carbonatanteil, hergestellt mit dem erfindungsgemäßen Verfahren gelöst. Vorteil einer solchen erfindungsgemäßen Gesteinskörnung ist, dass durch ihre Anreicherung mit CO2 das CO2 aus einer Umgebung entfernt wurde. Gleichzeitig stellt es ein Baustoff dar, welcher als Wertprodukt in der Baubranche verwendet werden kann. Durch dieses Entfernen von CO2 aus einer Umgebung leistet es einen positiven Beitrag, dem menschgemachten Klimawandel entgegenzuwirken und stellt gleichzeitig einen inzwischen knapp gewordenen Baustoff als simples Abfallprodukt eines ersten Prozesses dar. Ein weiterer Vorteil ist, dass in Abhängigkeit der Art und Eigenschaften des verwendeten Grundgesteins und in Abhängigkeit von den Prozessbedingungen im Reaktor eine Gesteinskörnung mit Carbonatanteil entsteht, welche sich hinsichtlich ihrer Eigenschafen wie Rauigkeit, Festigkeit und Stabilität für die Verwendung in der Baubranche eignet, sodass die diese eine klimafreundliche und umweltschonende Alternative zur natürlichen Gesteinskörnung bietet. Somit bietet die erfindungsgemäße hergestellte Gesteinskörnung mit Carbonatanteil den doppelten Vorteil eines CO2-Speichers zur Reduzierung des klimaschädlichen CO2 und stellt gleichzeitig einen dringend benötigten Rohstoff zumindest für die Bauindustrie zur Verfügung.

Die erfindungsgemäße Gesteinskörnung mit Carbonatanteil löst somit zum Teil die Schwächen des Stands der Technik und stellt insbesondere eine klimafreundliche und umweltfreundliche Alternative zu natürlich vorkommender Gesteinskörnung dar.

Die Aufgabe wird außerdem durch eine Anlage zur Herstellung von Gesteinskörnung mit Carbonatanteil ausgestaltet zur Durchführung des erfindungsgemäßen Verfahrens umfassend ein Zerkleinerungselement zum Zerkleinern von bereitgestelltem Grundgestein, einen Reaktor, welchem Grundgestein und CO2-haltiges Gas oder CO2-haltiges Fluid zugegeben wird, um aus dem Grundgestein eine Gesteinskörnung mit Carbonatanteil herzustellen und den CO2-Anteil des Gases oder Fluides zu reduzieren, und ein Mittel zum Entfernen der Gesteinskörnung mit Carbonatanteil aus dem Reaktor, gelöst.

In einer weiteren Ausführungsform ist dem Reaktor ein Element zur Abtrennung unerwünschter Bestandteile nachgeschaltet. Hierbei kommen als Elemente zur Abtrennung beispielsweise Siebe zur Anwendung, welche nach der Entfernung der Gesteinskörnung mit Carbonatanteil aus dem Reaktor einen einstellbaren Korngrößenbereich dieser Gesteinskörnung mit Carbonatanteil über die Siebmaschenweite der Siebe einstellen. Eine solche Ausführungsform ist vorteilhaft, da hierdurch eine gewünschte mittlere Gesteinskörnungskorngröße nach der Anreicherung des Grundgesteins mit CO2 zu CO2-angereicherter Gesteinskörnung in dem Reaktor eingestellt werden kann. Ein weiteres Element zur Abtrennung kann außerdem ein Gebläse umfassen. Hierbei können, in Abhängigkeit von der Geschwindigkeit eines mittels des Gebläses erzeugten Gasstroms insbesondere kleine Partikel unterhalb einer definierten Größe und/oder solche mit einer im Vergleich zu der CO2-angereicherten Gesteinskörnung niedrigeren Dichte, wie beispielsweise Verbrennungsrückstände (z.B. Flugasche), aus der CO2-angereicherten Gesteinskörnung nach ihrer Anreicherung entfernt werden. Eine solche Ausführungsform kann ebenfalls ein Element zur Abtrennung von bei der Anreicherung des Grundgesteins mit CO2 entstehenden Produkte umfassen. Wird beispielsweise bei der Anreicherung von Grundgestein mit CO2 eine Mischung verschiedener Produkte gebildet, wobei eins oder mehrere Hauptprodukte sind, welche von Nebenprodukten, welche weniger gewünschten Produkte, oder solche, welche einem anderen Verwendungszweck zukommen sollen, abgetrennt werden sollen, so können diese Hauptprodukte in einer solchen Ausführungsform mittels des Elements zur Abtrennung von den Nebenprodukten teilweise oder vollständig getrennt werden. Hierfür eignet sich beispielsweise das Schwimm-/Sink-Verfahren bei dem ein Gemisch von Stoffen, welche einen Unterschied der Dichte zueinander aufweisen, in ein in ein Bad mit einer Flüssigkeit gibt, dessen Dichte zwischen den Dichten der zu trennenden Stoffe liegt. Hierdurch schwimmen die Stoffe mit einer im Vergleich zu der Flüssigkeit in dem Bad geringeren Dichte an der Oberfläche der Flüssigkeit, wo sie von den Stoffen mit der höheren Dichte abgetrennt werden können, da diese in der Flüssigkeit absinken. Beispielsweise entstehen bei der Anreicherung von Mg₂SiO₄ als Grundgestein mit CO2 Magnesit (MgCO₃) mit einer Dichte von 3 g/cm³ und Quarz (SiO₂) mit einer Dichte von 2,65 g/cm³. Ist hierbei eines der beiden Produkte das bevorzugte Hauptprodukt, welches von dem Nebenprodukt getrennt werden soll, so kann dieses mit Hilfe des Elementes zur Abtrennung unerwünschter Bestandteile anhand der Dichteunterschiede beider Stoffe zueinander getrennt werden. Somit bietet das Element zur Abtrennung unerwünschter Bestandteile zusätzlich die Möglichkeit, unterschiedliche Produktqualitäten, beispielsweise charakterisiert durch das Verhältnis von Hauptprodukt zu Nebenprodukt oder unterschiedlichen Korngrößenbereichen, herstellen zu können.

In einer weiteren Ausführungsform ist der Reaktor ein Festbettreaktor oder ein Wirbelschichtreaktor. Bei einem Festbettreaktor wird der Reaktor zunächst mit dem Grundgesteins gefüllt. Nach dem Befüllen des Reaktors mit dem Grundgestein kann das CO2-haltige Gas oder das gasförmige CO2 oder das CO2-haltige Fluid in den Reaktor und/oder durch das in dem Reaktor befindliche, geschüttete Grundgestein, geleitet werden. Besonders bevorzugt jedoch ist, dass der Reaktor mit unter Druck stehendem CO2-haltigen Gas oder dem CO2-haltigens Fluid oder gasförmigem CO2 beaufschlagt wird. Eine solche Ausführungsform mit einem druckbeaufschlagten Festbettreaktor hat den Vorteil, dass er eine hohe spezifische Produktleistung besitzt. Ein Reaktor kann ebenfalls als modulare Reaktoreinheit, umfassend mehrere Festbettreaktormodule, ausgeführt sein, die in ihrer Gesamtheit als Festbettreaktor betrachtet werden können. Eine solche Ausführungsform umfassend mehrere Festbettreaktormodule hat den Vorteil, dass durch eine parallele Schaltung der Festbettreaktormodule das Verfahren zur Herstellung von CO2-angereicherter Gesteinskörnung quasi-kontinuierlich gefahren werden kann, wodurch sich ergebende Standzeiten durch Befüllung eines Reaktors und/oder durch Beaufschlagung mit Druck verkürzt oder ganz vermieden werden können. In einer Ausführung als Wirbelschichtreaktor wird eine Schüttung von Feststoffpartikeln, hier eine Schüttung von partikulärem Grundgesteins durch eine aufwärtsgerichtete Strömung eines Fluids, hier in Form eines CO2-haltigen Gases in einen fluidisierten Zustand versetzt, wodurch das partikuläre Grundgesteins in der Schwebe gehalten wird und wodurch die Schüttung fluidähnliche Eigenschaften aufweist. Hierbei kann das Grundgesteins an einer Seite dem Reaktor zugefügt und nach seiner Anreicherung mit CO2 als Gesteinskörnung mit Carbonatanteil an einer anderen Stelle des Reaktors entfernt werden. Eine solche Ausführungsform mit Wirbelschichtreaktor ist deshalb vorteilhaft, da hohe Relativgeschwindigkeiten zwischen dem kontinuierlichen Fluid und der dispersen festen Phase realisiert werden können, eine intensive Vermischung der Partikel stattfindet, eine große Reaktionsoberfläche bereitgestellt wird und ein hoher Wärmeübergang zwischen Fluid und Partikel gewährleistet werden kann. Außerdem können, bei entsprechender Auslegung des Reaktors und in Abhängigkeit der Gasgeschwindigkeit, kleine Partikel ab einer vordefinierten Größe durch ihre geringe Masse mit dem aus dem Reaktor austretenden CO2-abgereicherten Gasstrom aus dem Reaktor ausgetragen werden, sodass bereits hierdurch eine Abtrennung unerwünscht kleiner Partikel aus der CO2-angereicherten Gesteinskörnung realisiert werden kann. Außerdem können mit dem Gasstrom Partikel einer im Vergleich zu der Gesteinskörnung mit Carbonatanteil geringeren Dichte ebenfalls auf die gleiche Weise entfernt werden.

In einer weiteren Ausführungsform weist die Anlage ein Heizelement zum Beheizen des Reaktors auf, mit welchem im Reaktor eine Temperatur zwischen 50°C und 1000°C, bevorzugterweise zwischen 90°C und 300°C und besonders bevorzugt zwischen 120°C und 220°C eingestellt wird. Wie bereits voranstehend beschrieben kann eine erhöhte Temperatur zwischen 50°C und 1000°C insofern vorteilhaft sein, als dass die Anreicherung des Grundgesteins mit CO2 zu CO2-angereicherter Gesteinskörnung hierdurch beschleunigt werden kann, wobei insbesondere in einem Temperaturbereich zwischen 120°C und 220°C eine schnelle und effiziente Anreicherung des Grundgesteins mit CO2 zu CO2-angereicherter Gesteinskörnung erreicht werden kann und gleichzeitig die für die Anreicherung benötigte Energie gering ist. Eine solche erhöhte Temperatur kann beispielsweise durch die folgenden Heizelemente realisiert werden: Widerstandsheizung, Solarparabolrinne, Verbrennung von fossilen und/oder erneuerbaren Energieträgern, Nutzung von Abwärme eines dem Prozess der Anreicherung des Grundgesteins mit CO2 zu CO2-angereicherter Gesteinskörnung vorgeschalteten Prozesses, Nutzung der bei der thermischen Verwertung von Abfall anfallenden thermischen Energie, Nutzung von Geothermie.

In einer weiteren Ausführungsform umfasst die Anlage einen Einlass für komprimiertes Gas oder Fluid, mit welchem im Reaktor ein Druck bis 500bar, bevorzugterweise bis 350bar, besonders bevorzugt bis 150bar, noch mehr bevorzugt bis 75bar eingestellt wird. Begrifflich sei hierzu erläutert, dass als Gas jedes CO2-haltige Gas kommt. Hierbei kann es sich beispielsweise um reines CO2, beziehungswese überwiegend reines CO2, beispielsweise in Form von technischen Gasen handeln, oder es können Gasgemische wie beispielsweise Luft zum Einsatz kommen. Bevorzugt jedoch wird ein überwiegend CO2-haltiges Gas als komprimiertes Gas verwendet. Die Kompression des jeweiligen Gases kann mittels eines Verdichters, zum Beispiel in Form eines Kolbenverdichters und/oder Turboverdichters, realisiert werden, es kann aber erfindungsgemäß auch bereits unter Druck stehendes Gas aus einem dem Prozess der Anreicherung des Grundgesteins vorgeschalteten Prozesses zum Einsatz kommen. In einer solchen Ausführung einer Anlage mit einem Einlass für komprimiertes Gas kann ebenfalls ein Abtrennungselement vorhanden sein, welches CO2 aus einem CO2 enthaltenen Gas abscheidet, und dem Verdichter gegenüber dem Abtrennungselement bereitgestelltem Gas, konzentrierteres CO2, bereitstellt.

In einer weiteren Ausführungsform ist die Anlage zur Herstellung von Gesteinskörnung mit Carbonatanteil in einem Zementwerk angeordnet, wobei das bei der Herstellung von Zement anfallende CO2-haltige Gas dem Reaktor zusammen mit Grundgestein zugegeben wird. Das CO2-haltige Gas des Zementofens kann dabei als Gas oder gelöst in einem Fluid dem Reaktor zugegeben werden. Begrifflich sei hierzu erwähnt, dass Zement einen anorganischen und nichtmetallischen Baustoff bezeichnet, für dessen Herstellung die natürlichen Rohstoffe Kalkstein und Ton verwendet werden und welcher bei einer chemischen Reaktion mit Wasser (Hydratation) aushärtet. Zementklinker bezeichnet den gebrannten Bestandteil des Zements umfassend Kalkstein und Ton welche während der Zementklinkerherstellung auf etwa 1450°C erhitzt werden, bis sie an den Korngrenzen teilweise miteinander verschmelzen. Eine solche Ausführungsform ist insofern vorteilhaft, als dass die immensen Emissionen an CO2 bei der Herstellung von Zement durch die Anreicherung von Grundgestein mit CO2 und gleichzeitiger Abreicherung des Anteils an CO2 des bei der Zementherstellung anfallenden, CO2 enthaltenen Gases, reduziert werden können. Außerdem können bei der Herstellung von Zement prozessbedingt Gasströme mit einer hohen Konzentration an CO2 anfallen, wodurch ein effektiver und effizienter Betrieb des Verfahrens zur Herstellung von CO2-angereicherter Gesteinskörnung gewährleistet werden kann. Durch die Vermeidung eines Ausstoßes an klimaschädlichem CO2 einer Zementanlage können ebenfalls Kosten durch geringere CO2-Zertifikatkäufe erreicht werden und es entsteht ein Wertprodukt, welches zusätzlich zum Zement gewinnbringend am Markt veräußert werden kann, oder direkt dem produzierten Zement als Zuschlagstoff hinzugemischt werden kann, um dessen Eigenschaften positiv zu beeinflussen und/oder den Anteil an Zement innerhalb einer definierten Zementmischung zu erniedrigen. Da der Zementprozess bei hohen Temperaturen durchgeführt wird, kann die Abwärme des Zementprozesses zugleich als Prozesswärme für die CO2-Anreicherung des Grundgesteins verwendet werden.

In einer weiteren Ausführungsform ist der Reaktor zwischen einer Rohmühle und einem Zyklon-Vorwärmer angeordnet. In einer Rohmühle werden alle für die Zementherstellung benötigten Rohstoffe zusammen zu einem Rohstoffmehl vermahlen und mit einer beim Brennprozess freiwerdenden Wärmeenergie gleichzeitig getrocknet. Der Zyklon-Vorwärmer heizt das in der Rohmühle produzierte Rohstoffmehl vor, bevor es in dem eigentlichen Ofen, meist ausgeführt als Drehrohrofen, zugeführt wird, wodurch Energie eingespart werden kann. Der den Zyklon-Vorwärmer verlassende Gasstrom besitzt hierbei eine hohe Temperatur. Diese kann in einer Ausführungsform, in der der Reaktor zwischen der Rohmühle und dem Zyklon-Vorwärmer angeordnet ist, vorteilhaft genutzt werden. Beispielsweise können hierdurch kurze Kontaktzeiten des Grundgesteins mit dem CO2 ermöglicht werden. Außerdem kann bei einer solchen Ausführungsform auf ein Einbringen von zusätzlicher Wärmeenergie für die Anreicherung des Grundgesteins zu Grundgestein mit Carbonatanteil verzichtet werden, wenn der Gasstrom eine entsprechend hohe Temperatur besitzt.

In einer weiteren Ausführungsform ist der Reaktor zwischen einer Rohmühle und einer finalen Abluftreinigung angeordnet. Eine solche Ausführungsform hat den Vorteil, dass eine nach der Trocknung der für die Zementherstellung benötigten Rohstoffe in der Rohmühle nach wie vor vorliegende Wärmeenergie nicht ungenutzt bleibt, sondern für das erfindungsgemäße Verfahren genutzt wird, bevor ein Verlust an Wärmeenergie innerhalb der finalen Abluftreinigung erfolgt.

In einer weiteren Ausführungsform ist der Reaktor hinter einer primären Abluftreinigung des Zementwerks angeordnet. Eine solche Ausführungsform hat den Vorteil, dass weniger oder keine fremden Partikel aus der Zementherstellung über den die primäre Abluftreinigung verlassenden Gasstrom in die Anlage zu der Anreicherung des Grundgesteins mit CO2 eingetragen werden.

Die erfindungsgemäße Anlage löst somit zum Teil die Schwächen des Stands der Technik und schafft insbesondere eine klimafreundliche und umweltfreundliche Alternative zu natürlich vorkommender Gesteinskörnung.

Die Aufgabe wird außerdem durch eine Verwendung der Gesteinskörnung mit Carbonatanteil, hergestellt mit dem erfindungsgemäßen Verfahren als Ersatz für herkömmliche Gesteinskörnung in einem aushärtenden Baustoff oder als Baustoff selbst, gelöst. Hierdurch kann einerseits der Anteil an natürlichen Ressourcen bei der Verwendung der Gesteinskörnung mit Carbonatanteil als Zusatzstoff im Gemisch mit aushärtenden Baustoffen verringert werden. Anderseits kann hierdurch zusätzlich der Verbrauch an natürlichen Ressourcen verringert werden, wenn die Gesteinskörnung mit Carbonatanteil als Baustoff selbst, z.B. in Form von Sand zur Aufschüttung verwendet wird. Somit ergibt sich für die Gesteinskörnung mit Carbonatanteil eine bessere Umweltbilanz und/oder Klimabilanz im Vergleich zu natürlicher Gesteinskörnung.

Die erfindungsgemäße Verwendung als Baustoff oder im Gemisch mit aushärtenden Baustoffen löst somit zum Teil die Schwächen des Stands der Technik und schafft insbesondere eine klimafreundliche und umweltfreundliche Alternative im Vergleich zu natürlich vorkommender Gesteinskörnung oder deren Verwendung im Gemisch mit aushärtenden Baustoffen.

Die Aufgabe wird außerdem durch eine Verwendung der Gesteinskörnung mit Carbonatanteil, hergestellt mit dem erfindungsgemäßen Verfahren als Bodenadditiv in der Landwirtschaft oder dem Gartenbau gelöst. Hierdurch können die Bodeneigenschaften durch die Zugabe der erfindungsgemäßen Gesteinskörnung verbessert werden. Die Gesteinskörnung dient zur Regulierung des pH-Wertes des Bodens (z.B. als Mittel gegen Bodenversauerung) sowie als Lieferant von wichtigen Makro- und Mikronährstoffen, z.B. Magnesium, und kann beispielsweise als Gesteinsmehl in den Boden eingemischt werden.

Die erfindungsgemäße Verwendung als Bodenadditiv in der Landwirtschaft oder dem Gartenbau löst somit zum Teil die Schwächen des Stands der Technik und schafft insbesondere eine klimafreundliche und umweltfreundliche Alternative zu künstlichen Bodenbeimischungen.

An dieser Stelle sei ebenfalls noch erwähnt, dass im Rahmen der hier vorliegenden Patentanmeldung der Ausdruck "insbesondere" immer so zu verstehen ist, dass mit diesem Ausdruck ein optionales, bevorzugtes Merkmal eingeleitet wird. Der Ausdruck ist demzufolge nicht als "und zwar" und nicht als "nämlich" zu verstehen.

Es versteht sich, dass Merkmale der vorstehend bzw. in den Ansprüchen beschriebenen Lösungen gegebenenfalls auch kombiniert werden können, um die vorliegend erzielbaren Vorteile und Effekte entsprechend kumuliert umsetzen zu können. Die voranstehend aufgeführten Ausführungsformen der vorliegenden Erfindung können auch abweichend von den in den Ansprüchen angegebenen Rückbezügen miteinander kombiniert werden.

### Kurze Beschreibung der Figuren

- Fig. 1:: schematische Darstellung des erfindungsgemäßen Verfahrens;
- Fig. 2:: schematische Darstellung einer erfindungsgemäßen Anlage;
- Fig. 3:: schematische Darstellung eines Zementwerks nach dem Stand der Technik;
- Fig. 4:: schematische Darstellung einer erfindungsgemäßen Anlage, angeordnet in einem Zementwerk zwischen einer Rohmühle und einem Zyklonvorwärmer;
- Fig. 5:: schematische Darstellung einer erfindungsgemäßen Anlage, angeordnet in einem Zementwerk zwischen einer Rohmühle und einer finalen Abluftreinigung;
- Fig. 6:: schematische Darstellung einer erfindungsgemäßen Anlage, angeordnet in einem Zementwerk hinter einer primären Abluftreinigung; und
- Fig. 7: schematische Darstellung einer erfindungsgemäßen Anlage, ausgeführt mit einem solarthermisch beheizten Reaktor.

### Detaillierte Beschreibung der Ausführungsbeispiele

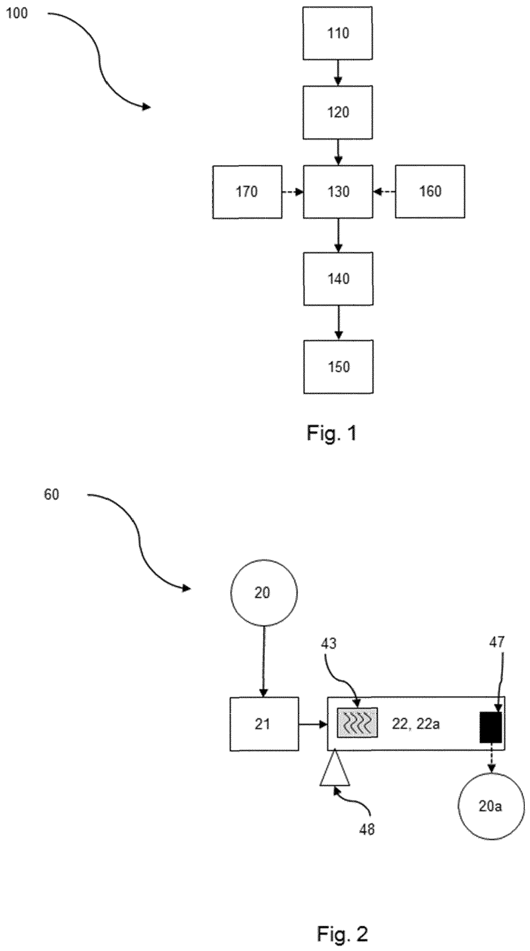

Fig. 1 zeigt eine schematische Darstellung des erfindungsgemäßen Verfahrens 100 zur Herstellung von Gesteinskörnung mit Carbonatanteil 20a umfassend zunächst den ersten Schritt des Bereitstellens 110 eines Grundgesteins 20, gefolgt von einem Zerkleinerungsschritt, in dem ein Zerkleinern 120 des Grundgesteins 20 stattfindet. Hiernach erfolgt in einem nächsten Schritt ein Zugeben 130 des zerkleinerten Grundgesteins 20 zusammen mit CO2 in Form eines CO2-haltigen Gases oder eines Fluides in einen Reaktor 22, 22a, wobei dem Reaktor 22, 22a das Grundgestein 20 mit einer mittleren Grundkorngröße von zwischen 10µm und 3000µm, bevorzugt zwischen 50µm und 2500µm und besonders bevorzugt zwischen 60µm und 2000µm zugegeben werden kann. Nach dem Zugeben 130 des zerkleinerten Grundgesteins erfolgt ein Anreichern 140 des Grundgesteins 20 in dem Reaktor 22, 22a mit CO2 zur Herstellung einer Gesteinskörnung mit festgebundenem CO2 als Carbonatanteil der Gesteinskörnung 20a unter Reduktion des CO2-Anteils des Gases oder Fluides. In einem weiteren Schritt erfolgt nach der Anreicherung 140 ein Entfernen 150 der Gesteinskörnung mit Carbonatanteil 20a aus dem Reaktor 22, 22a. Hiernach kann die Gesteinskörnung mit Carbonatanteil 20a eine mittlere Gesteinskörnungskorngröße von zwischen 10µm und 3000µm, bevorzugt zwischen 50µm und 2500µm und besonders bevorzugt zwischen 60µm und 2000µm besitzen. Auch kann erfindungsgemäß die mittlere Grundkorngröße des Grundgesteins 20 z.B. beim Zugeben 130 des zerkleinerten Grundgesteins in den Reaktor 22,22a so angepasst sein, dass die Gesteinskörnung mit Carbonatanteil 20a diese mittlere Gesteinskörnungskorngröße besitzt. Außerdem kann die mittlere Gesteinskörnungskorngröße der Gesteinskörnung mit Carbonatanteil 20a durch Mischen mit "klassischer" Gesteinskörnung so angepasst sein, dass das Gemisch aus der Gesteinskörnung mit Carbonatanteil 20a und der "klassischen" Gesteinskörnung eine mittlere Mischkorngröße von zwischen 10µm und 3000µm, bevorzugt zwischen 50µm und 2500µm und besonders bevorzugt zwischen 60µm und 2000µm besitzt. Die Gesteinskörnung mit Carbonatanteil kann auch mit klassischer Gesteinskörnung gemischt werden, um eine gewünschte mineralische Zusammensetzung der resultierenden Gesteinskörnung zu erhalten. Als Grundgestein 20 kann beispielsweise Grundgestein 20 enthaltend Silikate, bevorzugt ausgewählt aus der Olivingruppe und/oder der Pyroxengruppe (M1 M2 T206 mit M1 = Mg2+, Fe2+, Mn2+, Al3+, Fe3+, Ti4+, Ti3+, V3+, Sc3+, Cr3+, Zr4+, Zn2+; M2 = Mg2+, Fe2+, Mn2+, Ca2+, Na+, Li+; T = Si4+, Al3+, Fe3+) verwendet werden. Ebenfalls können als Grundgestein 20 Abraum und Aufbereitungsabgänge aus dem Bergbau und/oder Hüttenschlacke verwendet werden können. Wie vorliegend dargestellt, kann das erfindungsgemäße Verfahren 100 ebenfalls den weiteren Schritt des Beheizens 160 umfassen, um im Reaktor 22, 22a eine Temperatur zwischen 50°C und 1000°C, bevorzugterweise zwischen 90°C und 300°C und besonders bevorzugt zwischen 120°C und 220°C einzustellen. Hierbei kann für das Beheizen 160 des Reaktors 22, 22a Prozesswärme PW von einem von der Herstellung der Gesteinskörnung mit Carbonatanteil 20a verschiedenen Prozess genutzt werden. Außerdem können für das Beheizen 160 des Reaktors 22, 22a erneuerbare Energiequellen verwendet werden. Weiterhin kann das erfindungsgemäße Verfahren 100 den Schritt des Einleitens 170 von komprimiertem Gas oder Fluid umfassen, um im Reaktor 22, 22a einen Druck bis 500bar, bevorzugterweise bis 350bar, besonders bevorzugt bis 75bar einzustellen. Dieses Gas oder Fluid kann hierbei jedes dem Fachmann bekannte Gas oder Fluid sein, bevorzugterweise handelt es sich jedoch um ein CO2-haltges Gas oder Fluid. Die mit dem erfindungsgemäßen Verfahren hergestellte Gesteinskörnung mit Carbonatanteil 20a kann als Ersatz für herkömmliche Gesteinskörnung in einem aushärtenden Baustoff oder als Baustoff selbst Verwendung finden. Auch kann die mit dem erfindungsgemäßen Verfahren hergestellte Gesteinskörnung mit Carbonatanteil 20a als Bodenadditiv in der Landwirtschaft oder dem Gartenbau verwendet werden.

Fig. 2 zeigt eine schematische Darstellung einer erfindungsgemäßen Anlage 60 zur Herstellung von Gesteinskörnung mit Carbonatanteil 20a zur Durchführung eines erfindungsgemäßen Verfahrens 100 umfassend ein Zerkleinerungselement 21 zum Zerkleinern von bereitgestelltem Grundgestein 20, einen Reaktor 22, 22a, welchem Grundgestein 20 und CO2-haltiges Gas oder Fluid zugegeben wird, um aus dem Grundgestein 20 eine Gesteinskörnung mit Carbonatanteil 20a herzustellen und den CO2-Anteil des Gases oder Fluides zu reduzieren, und ein Mittel zum Entfernen 47 der Gesteinskörnung mit Carbonatanteil 20a aus dem Reaktor 22, 22a. Hierbei kann der Reaktor 22, 22a ein Festbettreaktor oder ein Wirbelschichtreaktor sein. Außerdem kann die Anlage 60 ein Heizelement 43 zum Beheizen 160 des Reaktors 22, 22a aufweisen, mit welchem im Reaktor 22, 22a eine Temperatur zwischen 50°C und 1000°C, bevorzugterweise zwischen 90°C und 300°C und besonders bevorzugt zwischen 120°C und 220°C eingestellt werden kann. Wie vorliegend dargestellt kann die Anlage 60 einen Einlass für komprimiertes Gas 48 oder Fluid umfassen, mit welchem im Reaktor 22, 22a ein Druck bis 500bar, bevorzugterweise bis 350bar, besonders bevorzugt bis 75bar eingestellt wird. Ist eine Abtrennung unerwünschter Bestandteile aus der Gesteinskörnung mit Carbonatanteil 20a erwünscht, so kann eine erfindungsgemäße Anlage 60 ein dem Reaktor 22, 22a nachgeschaltetes Element zur Abtrennung unerwünschter Bestandteile umfassen (hier nicht dargestellt).

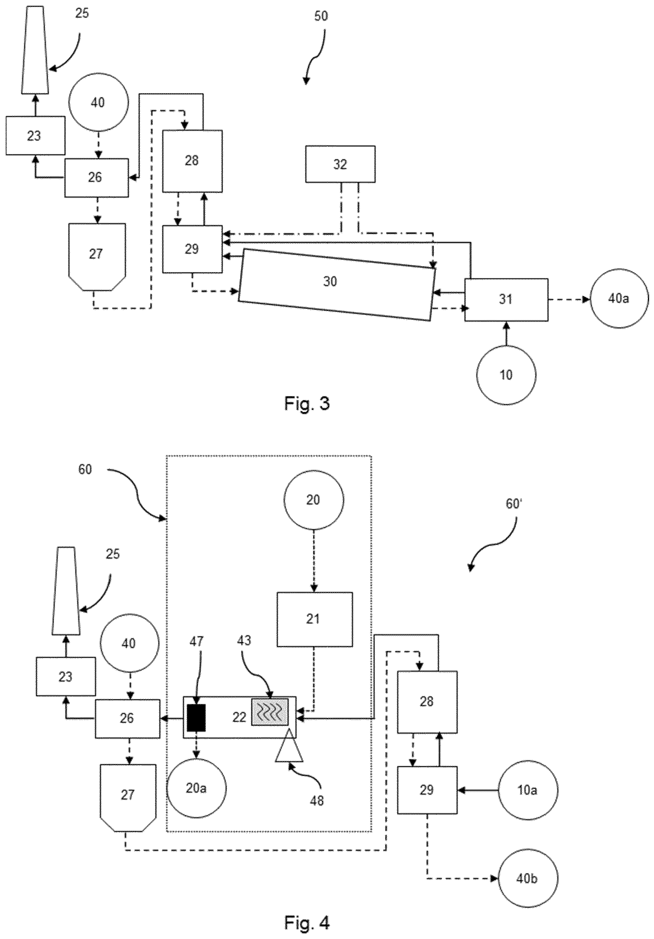

Fig. 3 zeigt eine schematische Darstellung eines Zementwerks nach dem Stand der Technik 50. Wie vorliegend dargestellt, wird zunächst einer Rohmühle 26 Rohmaterial für die Zementherstellung 40 bereitgestellt. Hierbei ist in dieser Figur und den Figuren 4-6 der Transport des festen Materials für die Klinkerherstellung als lang gestrichelte Pfeile und der Transport der gasförmigen Phase als durchgezogene Pfeile dargestellt. Der in Fig.3 fehlende Transport der Gesteinskörnung 20 durch die Anlage ist in den Fig. 4-6 mittels kurz gestrichelter Pfeile dargestellt. Nach Abschluss des Mahlvorgangs kann das gemahlene Rohmaterial für die Zementherstellung 40 in einem Silo 27 zwischengelagert werden, bevor es in einem Zyklon-Vorwärmer 28 vorgewärmt wird. Nach dem Vorwärmen wird das gemahlene und vorgewärmte Rohmaterial für die Zementherstellung 40 in einem Kalzinator 29 unter Einfluss von thermischer Energie entsäuert. Die hierfür benötigte thermische Energie wird meist mittels eines mit Brennstoff 32 betriebenen Brenners (hier nicht dargestellt) generiert. Anschließend gelangt das entsäuerte Rohmaterial für die Zementherstellung 40 in den Brennofen, hier ausgeführt als Drehrohrofen 30, welcher ebenfalls durch Verbrennung von Brennstoff 32 beheizt wird. Die Transportwege des Brennstoffs sind vorliegend anhand gepunkteter und gestrichelter Pfeile dargestellt. Das so gebrannte Material gelangt nach dem Brennvorgang in den Klinkerkühler 31, wo es abgekühlt wird und anschließend den Klinkerkühler 31 als Klinker 40a verlässt. Für die Kühlung des Klinkers im Klinkerkühler 31 wird diesem Luft 10 als Kühlmittel zur Verfügung gestellt. Die heißen Abgase des Drehrohrofens 30 werden, wie dargestellt, dem Kalzinator 29 zur Verfügung gestellt, anschließend an den Zyklon-Vorwärmer 28 weitergeleitet und von dort aus über die Rohmühle 28 und über eine finale Abluftreinigung 23 an einen Schornstein 25 geleitet.

Fig. 4 zeigt ein Zementwerk 60', in dem die erfindungsgemäße Anlage 60 (siehe Fig.2) zur Herstellung von Gesteinskörnung mit Carbonatanteil 20a zwischen einer Rohmühle 26 und einem Zyklonvorwärmer 28 angeordnet ist, wobei Drehrohrofen 30, Brennstoff 32, Klinker 40a sowie Luft 10 zum Kühlen hier nicht abgebildet sind und die Anlage lediglich bis zur Herstellung des Rohmaterials für die Zementherstellung vor dem Drehrohrofen 40b dargestellt ist. Für die hier nicht gezeigten Komponenten wird auf Fig.3 verwiesen. Hierbei wird das bei der Herstellung von Zement 40a anfallende CO2-haltige Gas 10a dem Reaktor 22 zusammen mit Grundgestein 20 als Gas oder gelöst in einem Fluid zugegeben. Die Anlage 60 kann hierbei in einem quasi-kontinuierlichen Betrieb betrieben werden, wenn der Reaktor 22 als modulare Reaktoreinheit umfassend mehrere Festbettreaktormodule ausgeführt ist, die in ihrer Gesamtheit als Festbettreaktor betrachtet werden können (nicht dargestellt). In einer solchen Ausführungsform kann der der quasi-kontinuierliche Betrieb dadurch realisiert werden, dass sich einer der Festbettreaktormodule in einem Betriebsmodus befindet, bei dem in ihm befindliches Grundgesteins 20 nach vorangegangenem Zerkleinern in dem Zerkleinerungselement 21 mit CO2 anreichert 140 wird, während mindestens einem weiteren Festbettreaktormodul Grundgestein 20 zugeben 130 wird und/oder während in ein weiteres Festbettreaktormodul komprimiertes Gas oder Fluid eingeleitet 170 wird und/oder während ein solches zum Beispiel mittels eines Heizelementes 43 beheizt wird. Als komprimiertes Gas kann beispielsweise das bei dem Brennen bzw. dem Kalzinieren freiwerdende CO2 mittels eines Kompressors dem Reaktor 22 über einen Einlass für komprimiertes Gas 48 zur Verfügung gestellt werden. Werden zum Beispiel in einem Zementwerk täglich 3000 Tonnen Klinker hergestellt, so entstehen bei diesem Prozess ungefähr 2400 Tonnen CO2 pro Tag bzw. etwa 100 Tonnen CO2 pro Stunde. Wird die erfindungsgemäße Anlage dazu verwendet, das gesamte CO2 zu binden, so werden bei einer 100%igen Reduktion des CO2-Anteils des Gases und bei der Verwendung von Olivin als Grundgestein etwa 3809 Tonnen pro Tag bzw. 158 Tonnen pro Stunde Olivin mit einer Korngröße von 120µm benötigt, was einem Volumen an Olivin von etwa 950m³ pro Tag bzw. 40m³ pro Stunde entspricht. Für die vollständige Aufnahme des CO2 werden etwa 1,5 h, bei einem Druck von 100bar und einer Temperatur von 175°C benötigt. Um einen entsprechenden kontinuierlichen Betrieb über 24 h zu gewährleisten, werden pro Tag somit 16 Intervalle benötigt bei denen jeweils 239 Tonnen Olivin 150 Tonnen CO2 binden. Hierfür können, wenn keine Standzeiten für Befüllung und Beaufschlagung mit Druck angenommen werden, zwei Reaktoren einen quasi-kontinuierlichen Betrieb gewährleisten. Es werden dabei beispielsweise 389 t carbonathaltige Gesteinskörnung erhalten. Die Gesteinskörnung mit Carbonatanteil 20a wird über das Mittel 47 aus dem Reaktor entnommen. Entsprechende Mittel sind dem Fachmann bekannt.

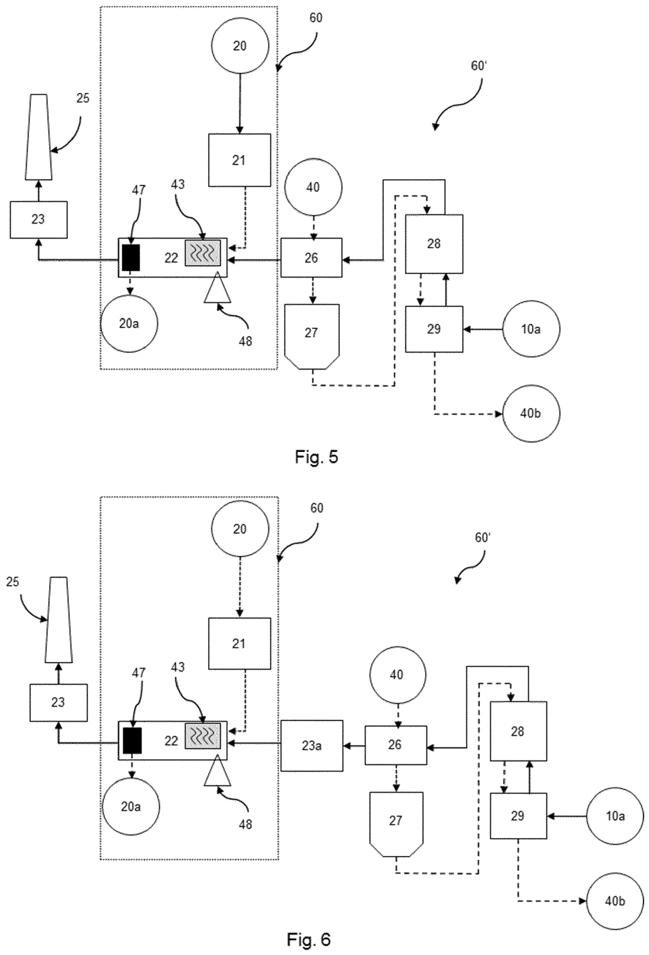

Fig. 5 zeigt alternativ zu Fig.4 eine erfindungsgemäße Anlage 60, welche zur Herstellung von Gesteinskörnung mit Carbonatanteil 20a in einem Zementwerk 60' zwischen einer Rohmühle 26 und einer finalen Abluftreinigung 23 angeordnet ist.

Fig. 6 zeigt ähnlich wie Fig.5 eine erfindungsgemäße Anlage 60, welche zur Herstellung von Gesteinskörnung mit Carbonatanteil 20a in einem Zementwerk 60' hier hinter einer primären Abluftreinigung 23a angeordnet ist.

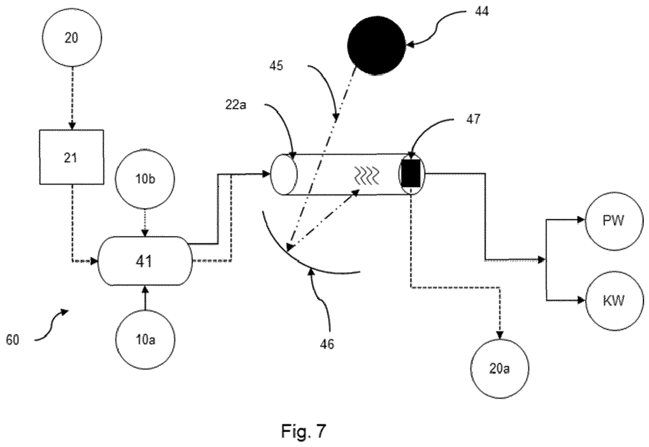

Fig. 7 zeigt eine erfindungsgemäße Anlage 60, bei der der Reaktor 22a zylinderförmig ausgeführt ist und zumindest teilweise von einer Solarparabolrinne 46 umgeben ist, um den Reaktor 22a zu erhitzen. Vorliegend ist der Transport der Gesteinskörnung 20 durch die Anlage mittels gestrichelter Pfeile dargestellt und der Transport der gasförmigen Phase mittels durchgezogener Pfeile dargestellt. Hierbei wird mittels eines Zerkleinerungselementes 21 zerkleinertes Grundgestein 20 einem Element 41 zur Beimengung von Wasser und CO2 bereitgestellt, in welchem CO2-haltiges Gas oder Fluid 10a und gegebenenfalls Wasser 10b hinzugefügt, beziehungsweise dem zerkleinerten Grundgestein 20 beigemengt werden. Dieses Gemisch wird anschließend dem zylinderförmigen Reaktor 22a bereitgestellt, in welchem die Anreicherung 140 des Grundgesteins 20 mit CO2 zur Herstellung der Gesteinskörnung mit festgebundenem CO2 als Carbonatanteil der Gesteinskörnung 20a stattfindet. Die für die Anreicherung 140 gegebenenfalls benötigte Energie wird hier durch eine Solarparabolrinne 46 bereitgestellt, welche das von der Sonne 44 ausgesandte Sonnenlicht 45 auf den zylinderförmig ausgeführten Reaktor 22a konzentriert und diesen zusammen mit der in ihm befindlichen Gasphase und dem Grundgestein 20 erhitzt. Nach Beendigung der Anreicherung 140 wird die Gesteinskörnung mit Carbonatanteil 20a mit Hilfe des Mittels zum Entfernen der CO2-angereicherten Gesteinskörnung 47 aus dem zylinderförmig ausgeführten Reaktor 22a entfernt. In der Gasphase / Fluidphase des Reaktors ist auch nach Anreicherung des Grundgesteins 20 mit CO2 und der einhergehenden Reduktion des CO2-Anteils des Gases oder Fluides nach wie vor eine hohe Wärmemenge vorhanden. Zudem ist die Carbonisierungs-Reaktion exotherm. Diese kann wie hier dargestellt als Prozesswärme PW weiteren Verbrauchern bereitgestellt werden und/oder in einem Kraftwerk KW, beispielsweise ausgeführt als Wärmekraftmaschine in Form eines an einen Generator gekoppelten Stirlingmotors, zur Erzeugung elektrischer Energie genutzt werden.

An dieser Stelle sei explizit darauf hingewiesen, dass die Merkmale der vorstehend bzw. in den Ansprüchen und/oder Figuren aufgezeigten Lösungen gegebenenfalls auch abweichend von den Anspruchsrückbezügen kombiniert werden können, um die erläuterten Merkmale, Effekte und Vorteile entsprechend kumuliert umsetzen bzw. erzielen zu können.

Es versteht sich, dass es sich bei den vorstehend erläuterten Ausführungsbeispielen lediglich um erste Ausgestaltungen der Erfindung handelt. Insofern beschränkt sich die Ausgestaltung der Erfindung nicht auf diese Ausführungsbeispiele. Alternative durch den Fachmann in Erwägung gezogene Ausführungsformen sind gleichermaßen vom Schutzbereich der vorliegenden Erfindung umfasst.

Sämtliche in den Anmeldungsunterlagen offenbarten Merkmale werden als erfindungswesentlich beansprucht, sofern sie einzeln oder in Kombination gegenüber dem Stand der Technik neu sind.

### Bezugszeichenliste

- 10: Luft
- 10a: CO2-haltiges Gas
- 10b: Wasser
- 20: Grundgestein
- 20a: Gesteinskörnung mit Carbonatanteil
- 21: Zerkleinerungselement
- 22: Reaktor
- 22a: zylinderförmiger Reaktor
- 23: finale Abluftreinigung
- 23a: primäre Abluftreinigung
- 25: Schornstein
- 26: Rohmühle
- 27: Silo
- 28: Zyklon-Vorwärmer
- 29: Kalzinator
- 30: Drehrohrofen
- 31: Klinkerkühler
- 32: Brennstoff
- 40: Rohmaterial für Zementherstellung
- 40a: Klinker
- 40b: Rohmaterial für Zementherstellung vor Drehrohrofen
- 41: Element zur Beimengung von Wasser und CO2
- 43: Heizelement
- 44: Sonne
- 45: Sonnenlicht
- 46: Solarparabolrinne
- 47: Mittel zum Entfernen der CO2-angereicherten Gesteinskörnung
- 48: Einlass für komprimiertes Gas
- 50: Zementwerk nach dem Stand der Technik
- 60: Anlage
- 60': Zementwerk mit Anlage
- 100: Verfahren zur Herstellung von Gesteinskörnung mit Carbonatanteil
- 110: Bereitstellen eines Grundgesteins
- 120: Zerkleinern von Grundgestein
- 130: Zugeben von zerkleinertem Grundgestein zusammen mit CO2 in Form eines CO2-haltigen Gases in einen Reaktor
- 140: Anreichern von Grundgesteins in dem Reaktor mit CO2
- 150: Entfernen von Gesteinskörnung mit Carbonatanteil aus dem Reaktor
- 160: Beheizen des Reaktors
- 170: Einleiten von komprimiertem, CO2-haltigem Gas in den Reaktor

- PW: Prozesswärme
- KW: Kraftwerk

## Patentansprüche

1. Ein Verfahren (100) zur Herstellung von Gesteinskörnung mit Carbonatanteil (20a) umfassend folgende Schritte:
- Bereitstellen (110) eines Grundgesteins (20),
- Zerkleinern (120) des Grundgesteins (20),
- Zugeben (130) des zerkleinerten Grundgesteins (20) zusammen mit CO2 in Form eines CO2-haltigen Gases oder eines CO2-haltigen Fluides in einen Reaktor (22, 22a),
- Anreichern (140) des Grundgesteins (20) in dem Reaktor (22, 22a) mit CO2 zur Herstellung einer Gesteinskörnung mit festgebundenem CO2 als Carbonatanteil als die Gesteinskörnung mit Carbonatanteil (20a) unter Reduktion des CO2-Anteils des Gases oder Fluides und
- Entfernen (150) der Gesteinskörnung mit Carbonatanteil (20a) nach der Anreicherung (120) aus dem Reaktor (22, 22a).

2. Das Verfahren (100) gemäß Anspruch 1, wobei dem Reaktor (22, 22a) das Grundgestein (20) mit einer mittleren Grundkorngröße von zwischen 10µm und 3000µm, bevorzugt zwischen 50µm und 2500µm und besonders bevorzugt zwischen 60µm und 2000µm zugegeben wird.

3. Das Verfahren (100) gemäß Anspruch 1 oder 2, wobei die Gesteinskörnung mit Carbonatanteil (20a) eine mittlere Gesteinskörnungskorngröße von zwischen 10µm und 3000µm, bevorzugt zwischen 50µm und 2500µm und besonders bevorzugt zwischen 60µm und 2000µm besitzt.

4. Das Verfahren (100) gemäß Anspruch 3, wobei die mittlere Grundkorngröße des Grundgesteins (20) so angepasst ist, dass die Gesteinskörnung mit Carbonatanteil (20a) diese mittlere Gesteinskörnungskorngröße besitzt,
und/oder
wobei die mittlere Gesteinskörnungskorngröße der Gesteinskörnung mit Carbonatanteil (20a) (20) durch Mischen mit klassischer Gesteinskörnung so angepasst ist, dass ein entsprechendes Gemisch eine mittlere Mischkorngröße von zwischen 10 µm und 3000 µm, bevorzugt zwischen 50 µm und 2500 µm und besonders bevorzugt zwischen 60 µm und 2000 µm besitzt.

5. Das Verfahren (100) gemäß einem der vorangehenden Ansprüche, umfassend den weiteren Schritt des Beheizens (160) des Reaktors, um im Reaktor (22, 22a) eine Temperatur zwischen 50°C und 1000°C, bevorzugterweise zwischen 90°C und 300°C und besonders bevorzugt zwischen 120°C und 220°C einzustellen.

6. Das Verfahren (100) gemäß Anspruch 5, wobei für das Beheizen (160) des Reaktors (22, 22a)
- Prozesswärme (PW) von einem von der Herstellung der Gesteinskörnung mit Carbonatanteil (20a) verschiedenen Prozess genutzt wird,
oder
- erneuerbare Energiequellen verwendet werden, vorzugsweise ist der Reaktor (22) zylinderförmig (22a) ausgeführt und zumindest teilweise von einer Solarparabolrinne (46) umgeben, um den Reaktor (22a) zu erhitzen.

7. Das Verfahren (100) gemäß einem der vorangehenden Ansprüche, umfassend den weiteren Schritt des Einleitens (170) von komprimiertem Gas, das aus CO2 besteht oder zumindest einen CO2-Anteil besitzt, oder des CO2-haltigen Fluids, in den Reaktor (22, 22a), um im Reaktor (22, 22a) einen Druck bis 500bar, bevorzugterweise bis 350bar, besonders bevorzugt bis 150bar, noch mehr bevorzugt bis 75bar einzustellen.

8. Das Verfahren (100) gemäß einem der vorangehenden Ansprüche, wobei das Grundgestein (20) Silikate, bevorzugt ausgewählt aus der Olivingruppe und/oder der Pyroxengruppe (M1 M2 T₂O₆ mit M1 = Mg²⁺, Fe²⁺, Mn²⁺, Al³⁺, Fe³⁺, Ti⁴⁺, Ti³⁺, V³⁺, Sc³⁺, Cr³⁺, Zr⁴⁺, Zn²⁺; M2 = Mg²⁺, Fe²⁺, Mn²⁺, Ca²⁺, Na⁺, Li⁺; T = Si⁴⁺, Al³⁺, Fe³⁺) enthält.

9. Das Verfahren (100) gemäß einem der vorangehenden Ansprüche, wobei als Grundgestein (20) Abraum und Aufbereitungsabgänge aus dem Bergbau und/oder Hüttenschlacke verwendet wird.

10. Eine Gesteinskörnung mit Carbonatanteil (20a), hergestellt mit einem Verfahren (100) nach einem der voranstehenden Ansprüche.

11. Eine Anlage (60) zur Herstellung von Gesteinskörnung mit Carbonatanteil (20a) ausgestaltet zur Durchführung eines Verfahrens (100) nach einem der Ansprüche 1 bis 9 umfassend ein Zerkleinerungselement (21) zum Zerkleinern von bereitgestelltem Grundgestein (20), einen Reaktor (22, 22a), dem Grundgestein (20) und CO2-haltiges Gas oder CO2-haltiges Fluid zugegeben wird, um aus dem Grundgestein (20) eine Gesteinskörnung mit Carbonatanteil (20a) herzustellen und den CO2-Anteil des Gases oder Fluides zu reduzieren, und ein Mittel zum Entfernen (47) der Gesteinskörnung mit Carbonatanteil (20a) aus dem Reaktor (22, 22a).

12. Eine Anlage (60) gemäß Anspruch 11, **dadurch gekennzeichnet, dass** dem Reaktor (22, 22a) ein Element zur Abtrennung unerwünschter Bestandteile nachgeschaltet ist und/oder der Reaktor (22, 22a) ein Festbettreaktor oder ein Wirbelschichtreaktor ist.

13. Ein Anlage (60) gemäß Anspruch 11 bis 12, **dadurch gekennzeichnet, dass** die Anlage (60)
- ein Heizelement (43) zum Beheizen (160) des Reaktors (22, 22a) aufweist, mit welchem im Reaktor (22, 22a) eine Temperatur zwischen 50°C und 1000°C, bevorzugterweise zwischen 90°C und 300°C und besonders bevorzugt zwischen 120°C und 220°C eingestellt wird
und/oder
- einen Einlass für komprimiertes Gas (48) oder Fluid in den Reaktor (22, 22a) umfasst, mit welchem im Reaktor (22, 22a) ein Druck bis 500bar, bevorzugterweise bis 350bar, besonders bevorzugt bis 75bar eingestellt wird.

14. Eine Anlage (60) gemäß einem der Ansprüche 11 bis 13, **dadurch gekennzeichnet, dass** die Anlage (60) zur Herstellung von Gesteinskörnung mit Carbonatanteil (20a) in einem Zementwerk (60') angeordnet ist, wobei das bei der Herstellung von Zement (40a) anfallende CO2-haltige Gas dem Reaktor (22, 22a) zusammen mit Grundgestein (20) zugegeben wird, vorzugsweise ist der Reaktor (22, 22a) zwischen einer Rohmühle (26) und einem Zyklonvorwärmer (28), oder zwischen einer Rohmühle (26) und einer finalen Abluftreinigung (23), oder hinter einer primären Abluftreinigung (23a) des Zementwerks (60') angeordnet.

15. Verwendung der Gesteinskörnung mit Carbonatanteil (20a), hergestellt mit dem Verfahren (100) nach einem der Ansprüche 1 - 9 als Ersatz für herkömmliche Gesteinskörnung in einem aushärtenden Baustoff oder als Baustoff selbst oder als Bodenadditiv in der Landwirtschaft oder dem Gartenbau.
